(19) **Europäisches Patentamt / European Patent Office / Office européen des brevets**

(11) **EP 3 842 761 A2**

(12) # EUROPEAN PATENT APPLICATION

(43) Date of publication:
**30.06.2021 Bulletin 2021/26**

(51) Int Cl.:
***G01C 21/34*** *(2006.01)*

(21) Application number: **21167109.4**

(22) Date of filing: **07.04.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **30.07.2020 CN 202010749202**

(71) Applicant: **BEIJING BAIDU NETCOM SCIENCE TECHNOLOGY CO., LTD.**
**No.10 Shangdi 10th Street**
**Haidian District**
**Beijing 100085 (CN)**

(72) Inventors:
• **XIA, Deguo**
  **Beijing (CN)**
• **LI, Man**
  **Beijing (CN)**
• **LU, Zhen**
  **Beijing (CN)**
• **BAI, Hongxia**
  **Beijing (CN)**
• **LIU, Yuting**
  **Beijing (CN)**

(74) Representative: **J A Kemp LLP**
**14 South Square**
**Gray's Inn**
**London WC1R 5JJ (GB)**

(54) **METHOD AND APPARATUS FOR PROCESSING NAVIGATION DATA, DEVICE AND STORAGE MEDIUM**

(57)    The present application discloses a method and an apparatus for processing navigation data, a device and a storage medium, which relates to the fields of automatic driving and intelligent transportation, etc. The specific implementation solution is: in a process of vehicle driving, by obtaining real-time traffic status information of a local route within a distance ahead in real time, sending the real-time communication state information of the local route to a server, and optimizing and adjusting a recommended order of each candidate route by the server according to the real-time traffic status information of the local route, a current optimal navigation route can be determined by the vehicle terminal according to an adjusted recommended order of candidate routes, thereby can dynamically optimize and adjust a navigation route according to a real-time traffic status of the local route ahead, and provide a better navigation route for a vehicle.

FIG. 2

EP 3 842 761 A2

**Description**

**TECHNICAL FIELD**

The present application relates to automatic driving and intelligent transportation technologies in data processing and, in particular, to a method and an apparatus for processing navigation data, a device and a storage medium.

**BACKGROUND**

When users are traveling, providing users with accurate navigation route planning, route time-consuming estimation and other information can significantly improve the user's travel experience. In navigation route planning, based on historical data, a planned route is formulated by comprehensively considering factors that affect a travel plan such as route time-consuming at departure time, degree of congestion, a sudden traffic accident or traffic control.

**SUMMARY**

The present application provides a method and an apparatus for processing navigation data, a device and a storage medium.

According to a first aspect of the present application, a method for processing navigation data is provided, which includes:

receiving real-time traffic status information of a local route sent by a vehicle terminal; adjusting a recommended order of candidate routes of the vehicle terminal according to the real-time traffic status information of the local route; and sending adjusted recommended order of the candidate routes to the vehicle terminal.

According to a second aspect of the present application, a method for processing navigation data is provided, which includes:

sending real-time traffic status information of a local route to a server; receiving a recommended order of candidate routes fed back by the server, where the recommended order of the candidate routes is obtained after adjustment according to the real-time traffic status information of the local route; and determining a current optimal navigation route according to the recommended order of the candidate routes.

According to a third aspect of the present application, an apparatus for processing navigation data is provided, which includes:

a data communicating module, configured to receive real-time traffic status information of a local route sent by a vehicle terminal; a route optimizing module, configured to adjust a recommended order of candidate routes of the vehicle terminal according to the real-time traffic status information of the local route; and the data communicating module is further configured to send adjusted recommended order of the candidate routes to the vehicle terminal.

According to a fourth aspect of the present application, an apparatus for processing navigation data is provided, which includes:

a data communicating module, configured to send real-time traffic status information of a local route to a server; the data communicating module is further configured to receive a recommended order of candidate routes fed back by the server, where the recommended order of the candidate routes is obtained after adjustment according to the real-time traffic status information of the local route; and a navigation route optimizing module, configured to determine a current optimal navigation route according to the recommended order of the candidate routes.

According to a fifth aspect of the present application, an electronic device is provided, which includes:

at least one processor; and a memory in communication with the at least one processor; where the memory stores instructions executable by the at least one processor, and the instructions are executed by the at least one processor to enable the at least one processor to execute the method described in the first aspect.

According to a sixth aspect of the present application, an electronic device is provided, which includes:

at least one processor; and a memory in communication with the at least one processor; where the memory stores instructions executable by the at least one processor, and the instructions are executed by the at least one processor to enable the at least one processor to enable the method described in the second aspect.

According to a seventh aspect of the present application, a non-transitory computer readable storage medium storing computer instructions is provided, where the computer instructions are used to cause the computer to execute the method described in any one of the first and second aspects.

According to an eighth aspect of the present application, the present application provides a computer program product, where the program product includes: a computer program, the computer program is stored in a readable storage medium, at least one processor of the electronic device can read the computer program from the readable storage medium, and the at least one processor executes the computer program such that the electronic device executes the method described in the first aspect.

According to the technology of the present application, the navigation route can be optimized in real time according to the real-time traffic status information of the local route.

It should be understood that the content described in this part is not intended to identify key or important features of embodiments of the present application, nor is it intended to limit the scope of the present application. Other features of the present application will be easily understood by the following description.

## BRIEF DESCRIPTION OF THE DRAWINGS

The accompanying drawings are for a better understanding of the present solution and are not intended to limit the present application. Wherein,

FIG. 1 is a schematic diagram of a system architecture of a navigation system according to an embodiment of the present application;
FIG. 2 is a flowchart of a method for processing navigation data provided by Embodiment 1 of the present application;
FIG. 3 is a flowchart of a method for processing navigation data provided by Embodiment 2 of the present application;
FIG. 4 is a schematic diagram of a scene of processing navigation data provided by Embodiment 2 of the present application;
FIG. 5 is a schematic diagram of an apparatus for processing navigation data provided by Embodiment 3 of the present application;
FIG. 6 is a schematic diagram of an apparatus for processing navigation data provided by Embodiment 5 of the present application;
FIG. 7 is a schematic diagram of an apparatus for processing navigation data provided by Embodiment 6 of the present application;
FIG. 8 is a block diagram of an electronic device used to implement the method for processing navigation data of the embodiments of the present application; and
FIG. 9 is a block diagram of another electronic device used to implement the method for processing navigation data of the embodiments of the present application.

## DESCRIPTION OF EMBODIMENTS

The following describes exemplary embodiments of the present application with reference to the accompanying drawings, which include various details of the embodiments of the present application to facilitate understanding, which should be regarded as merely exemplary. Therefore, those of ordinary skilled in the art should realize that various changes and modifications can be made to the embodiments described herein without departing from the scope and spirit of the present application. Likewise, for clarity and conciseness, descriptions of well-known functions and structures are omitted in the following description.

The present application provides a method and an apparatus for processing navigation data, a device and a storage medium, which is applied to automatic driving and intelligent transportation technologies in the field of data processing, so as to dynamically update a navigation route according to the real-time traffic status information of the local route at the current time, so as to realize the effect of optimizing the navigation route.

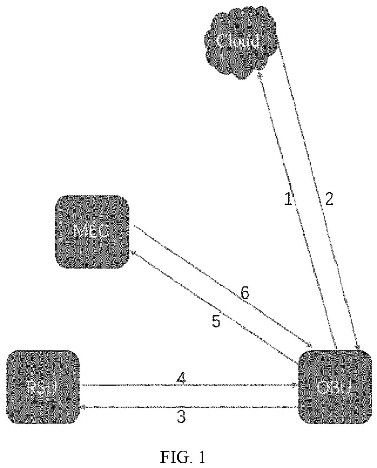

The embodiment of the present application is applied to a navigation system. FIG. 1 shows a system architecture of a navigation system, as shown in FIG. 1, the navigation system includes a vehicle terminal installed on the vehicle (for example, it may be an on board unit (On Board Unit, OBU) shown in FIG. 1), a road side device, a multi-access edge computing (multi-access edge computing, MEC) server, and a cloud server. Where, in a data flow shown by an arrow labeled 1 in FIG. 1, when a user initiates navigation route planning for the first time, the vehicle terminal or map navigation APP (Application, application) terminal requests a cloud server for a planned route with the specified starting point and a destination. In the data flow shown by the arrow labeled 2 in FIG. 1, when the cloud server returns the collection of candidate routes to the vehicle terminal or map navigation APP terminal, it also returns the global information of each candidate route which includes time-consuming data characteristics of each candidate route on each section of the road. As shown in the data flow shown by the arrows labeled 3 and 4 in FIG. 1, in a process of vehicle driving, the traffic facilities deployed based on sensors and fifth-generation mobile communication (5G) can be networked, and the road side unit (Road Side Unit, RSU) can interact with the OBU to provide the OBU with real-time traffic status information of the local route within its coverage range, for example, waiting time of traffic lights, time to turn left, go straight, and turn right through an intersection, and real-time traffic time of the next section after passing through the intersection by different routes. In the data flow shown by the arrows labeled 5 and 6 in FIG. 1, based on the real-time traffic status information of the local route and the global information of the candidate routes, OBU obtains the adjusted and reordered candidate routes through MEC server for users to select.

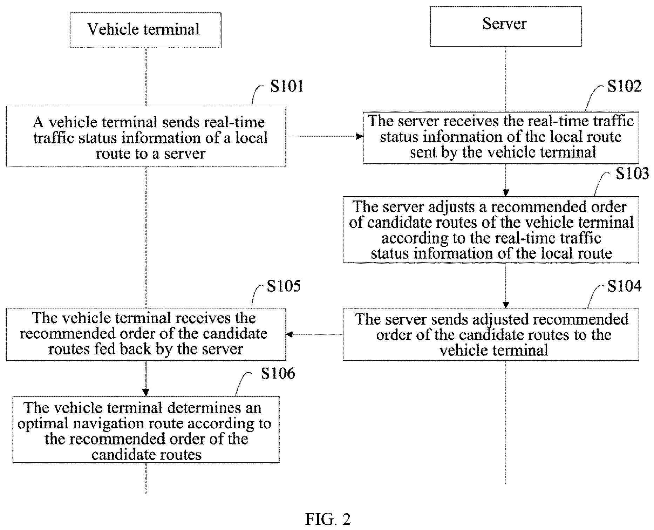

FIG. 2 is a flowchart of a method for processing navigation data provided by Embodiment 1 of the present application. In this embodiment, as shown in FIG 2, the specific steps of the method are as follows:

step S101, a vehicle terminal sends real-time traffic status information of a local route to a server.

In this embodiment, the local route may include a route within a certain distance ahead in the current driving direction of the vehicle terminal, and may include an intersection and/or a road section.

Where, the real-time traffic status information of the local route is used to determine the real-time consuming time required to pass the local route under the current road condition.

Exemplarily, the real-time traffic status information of the local route may include real-time road condition information of the local route, and the vehicle terminal can estimate the real-time consuming time of passing the local route under the current road condition according to the real-time road condition information of the local route.

Exemplarily, the real-time traffic status information of the local route may also include the real-time traffic consuming time of each intersection and/or road section in the local route.

In addition, the real-time traffic status information of the local route can be obtained by the vehicle terminal from the road side unit, the cloud server, or other devices, which is not specifically limited in this embodiment.

After obtaining the real-time traffic status information of the local route, the vehicle terminal sends the real-time traffic status information of the local route to the server, and the server completes the reordering of the candidate routes according to the real-time traffic status information of the local route.

Step S102, the server receives the real-time traffic status information of the local route sent by the vehicle terminal.

In this embodiment, the server used to adjust the recommended order of the candidate routes and other related data processing can be a MEC server, or a server based on edge computing, or other devices that have data processing capabilities and can perform data communication with the vehicle terminal, which is not specifically limited in this embodiment.

Step S103, the server adjusts a recommended order of candidate routes of the vehicle terminal according to the real-time traffic status information of the local route.

After receiving the real-time traffic status information of the local route, the server can update consuming time of each candidate route according to the real-time traffic status information of the local route, and reorder the recommended order of each candidate route according to updated consuming time. After updating, the shorter the consuming time of the candidate route is, the higher the recommended order of it is, therefore, the recommendation order of the candidate routes can be dynamically optimized according to the real-time communication state information of the local route.

Step S104, the server sends adjusted recommended order of the candidate routes to the vehicle terminal.

Step S105, the vehicle terminal receives the recommended order of the candidate routes fed back by the server.

Where, the recommended order of the candidate routes received by the vehicle terminal is obtained after adjustment according to the real-time traffic status information of the local route.

Step S106, the vehicle terminal determines an optimal navigation route according to the recommended order of the candidate routes.

The vehicle terminal selects the candidate route with the highest recommended order as the optimal navigation route according to the recommended order of the candidate routes.

The embodiment of the present application, which includes by, in the process of the vehicle driving, obtaining the real-time traffic status information of the local route within a distance ahead in real time, sending the real-time communication state information of the local route to the server, and optimizing and adjusting the recommended order of each candidate route by the server according to the real-time traffic status information of the local route, the current optimal navigation route can be determined by the vehicle terminal according to the adjusted recommended order of the candidate routes, thereby can dynamically optimize and adjust a navigation route according to a real-time traffic status of the local route ahead, and provide a better navigation route for a vehicle.

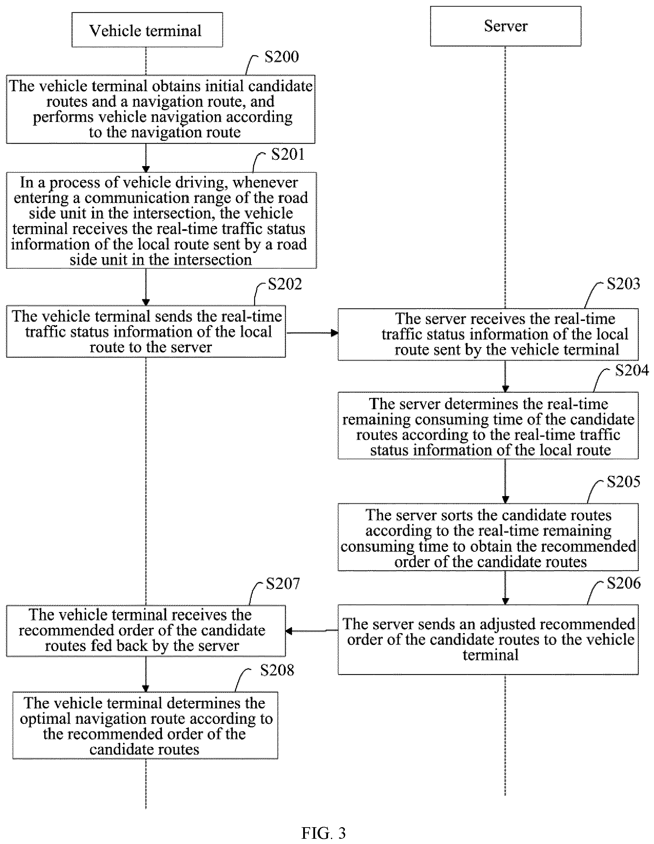

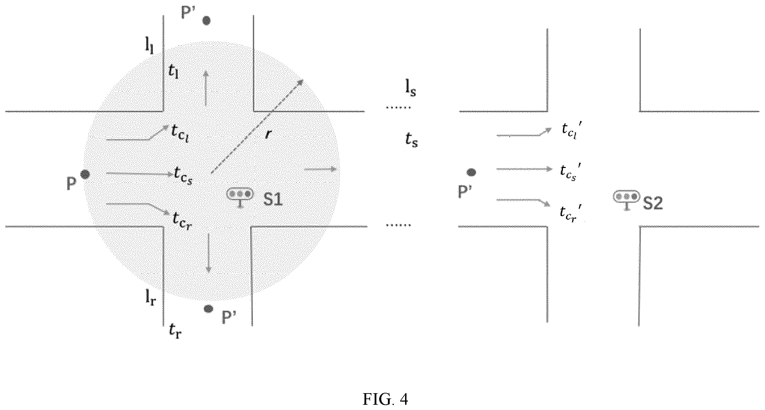

FIG. 3 is a flowchart of a method for processing navigation data provided by Embodiment 2 of the present application; and FIG. 4 is a schematic diagram of a scene of processing navigation data provided by Embodiment 2of the present application. On the basis of Embodiment, in this embodiment, when driving into a communication range of the road side unit in the intersection, the vehicle terminal receives the real-time traffic status information of the local route sent by the road side unit in the intersection. The real-time traffic status information of the local route includes: the real-time consuming time of arriving at the intersection from the current position; the consuming time waiting for traffic lights passing through the intersection; and the real-time consuming time to pass the first road section after passing through the intersection. As shown in FIG. 3, the specific steps of the method are as follows:

Step S200, the vehicle terminal obtains initial candidate routes and a navigation route, and performs vehicle navigation according to the navigation route.

In this embodiment, for a origin-destination point (Origin-Destination, referred to as OD point) of the user route specified by the user, the vehicle terminal can send the OD point to the cloud server, and the cloud server obtains at least one candidate route according to the route planned by the OD point, and selects preference factors according to the navigation route to determine the recommended order of the candidate routes; and sends the candidate routes and the recommended order to the vehicle terminal.

Where, preference factors for selecting the navigation route may be distance, travel time, road toll, whether to go on a high speed, etc., which is not specifically limited in this embodiment. In addition, the recommended order of the candidate routes may be determined according to one of the preference factors or the combination of multiple preference factors, which is not specifically limited in this embodiment.

In this embodiment, the candidate routes planned for the first time is a set of optimal planned routes predicted based on information such as traffic flow and road condition in the same period of history at the departure time(that is, the time of route planning).

The candidate routes data fed back by the cloud server to the vehicle terminal includes estimated passing time of each road section on the candidate route. Where, the estimated passing time of the road section refers to the passing time of each road section estimated at the departure time.

If $t_a$ is used to represent the departure time, and $K$ is used to represent the set of candidate routes obtained, $k$ represents any candidate route, $L$ represents the set of road sections on route k, $l$ represents the road section number in the route, and $c$ represents the intersection number in the route. The time-consuming $\varphi_k^a$ of the route $k$ obtained by the first planning can be expressed as:

$$\varphi_k^a = \sum_{l \in L} f_t (l, t_a), \ \forall k \in K.$$

Where, $f_t(l, t_a)$ is the time used to pass $l$ road section estimated at time $t_a$.

The vehicle-mounted terminal selects the candidate route with the highest recommended order as the navigation route, or the vehicle terminal displays the sorted first several candidate routes and the recommended order thereof through the display apparatus for the user to choose and determine a final navigation route.

After determining the navigation route, the vehicle terminal performs navigation according to the navigation route, and the vehicle drives along the navigation route.

Step S201, in a process of vehicle driving, whenever entering a communication range of the road side unit in the intersection, the vehicle terminal receives the real-time traffic status information of the local route sent by a road side unit in the intersection.

Where, the real-time traffic status information of the local route is determined according to the real-time road condition information of the local route at the current time.

In this embodiment, in the process of the vehicle driving, when the vehicle is about to arrive at the next intersection and the vehicle terminal enters the communication range of the road side unit in the intersection, the vehicle terminal can interact with the road side unit in the intersection to receive the real-time traffic status information of the local route sent by the road side unit.

In practical applications, the passing time of the intersection is affected by real-time traffic lights, the passing time of the road section may also change due to possible traffic incidents or vehicle accidents on the spot, and the road side unit can feed back relevant information affecting the passing time of the intersection to the vehicle terminal.

In a possible implementation, the real-time traffic status information of the local route may include the real-time road condition information of the local route, and the vehicle terminal can estimate the real-time consuming time of passing the local route under the current road condition based on the real-time road condition information of the local route.

Exemplarily, the road side unit can collect traffic flow, road condition and road environment on the road, control information of traffic lights in the intersections and other information within its coverage area, and can send these information to the vehicle terminal as the real-time traffic status information of the local route.

In a possible implementation, the real-time traffic status information of the local route may also include the real-time traffic consuming time of each intersection and/or road section in the local route.

Exemplarily, the road side unit can collect traffic flow, road condition and road environment on the road, control information of traffic lights in the intersections and other information within its coverage area, and calculate, according to the current road information, to obtain the real-time traffic consuming time of each road section and the time to wait for traffic lights when passing through the intersection, and send the calculation results to the vehicle terminal as the real-time traffic status information of the local route.

Further, the real-time traffic status information of the local route includes at least one of the following:

the real-time consuming time of arriving at the next intersection from the current position; the consuming time waiting for traffic lights passing through the intersection; and the real-time traffic consuming time of passing through the first road section after the intersection.

In practical applications, affected by the traffic flow, road condition, road environment, traffic signal control information on the road, the real-time road conditions of each road section and intersection are constantly changing, which leads to the actual travel time of the vehicle reaching each road section and intersection also changes. Therefore, in the process of vehicle driving, by obtaining the real-time traffic status information including the real-time traffic consuming time of adjacent road sections and the consuming time waiting for traffic lights at the intersections, calculating the real-time remaining time of the candidate routes more accurately based on the real-time traffic status information of the local route in the following steps, and reordering the candidate routes based on the real-time remaining time, the performance of the real time and the accuracy of the recommended candidate routes can be improved.

Where, the time-consuming waiting for traffic lights passing through the intersection includes at least one of the following:

the real-time consuming time of waiting for traffic lights to turn left through the intersection; the real-time consuming time of waiting for traffic lights to go straight through the intersection; and the real-time consuming time of waiting for traffic lights to turn right through the intersection.

The real-time traffic consuming time of passing through the first road section after the intersection includes at least one of the following:

the real-time traffic consuming time of passing through the first road section after turning left through the intersection; the real-time traffic consuming time of passing through the first road section after going straight through the intersection; and the real-time traffic consuming time of passing through the first road section after turning right through the intersection.

In practical applications, an intersection may have multiple travel directions, such as turning left, going straight, turning right, and at the same time, when passing through the intersection in different directions, the time required to wait for traffic lights is different. Therefore, by separately obtaining the real-time consuming time of waiting for traffic lights to pass through the intersection in different travel directions, the real-time remaining consuming time of the candidate routes can be determined more accurately, thereby can further optimize the recommended order of the candidate routes and the navigation route.

In this embodiment, the real-time traffic status information of the local route is used to determine the real-time consuming time required to pass the local route under the current road condition, and this embodiment does not specifically limit which information the real-time traffic status information of the local route includes.

After obtaining the real-time traffic status information of the local route, the vehicle terminal sends the real-time traffic status information of the local route to the server, and the server completes the reordering of the candidate routes according to the real-time traffic status information of the local route.

In this step, by receiving the real-time traffic status information of the local route sent by the road side unit within the communication range of the road side unit in the intersection, the real-time traffic status information of the current local route can be obtained accurately in real time, which improves the performance of the real-time and the accuracy of the real-time traffic status information of the current local route.

Step S202, the vehicle terminal sends the real-time traffic status information of the local route to the server.

In this embodiment, the server used to adjust the recommended order of the candidate routes and other related data processing can be a MEC server, which can improve the data processing efficiency. In this embodiment, the MEC server is taken as an example for illustration, and the server can also be implemented by other electronic devices, which is not specifically limited in this embodiment.

Step S203, the server receives the real-time traffic status information of the local route sent by the vehicle terminal.

After receiving the real-time traffic status information of the local route, through the subsequent steps S203-S204, the MEC server adjusts the recommended order of the candidate routes of the vehicle terminal according to the real-time traffic status information of the local route.

Step S204, the server determines the real-time remaining consuming time of the candidate routes according to the real-time traffic status information of the local route.

Specifically, according to the real-time traffic status information of the local route, the real-time consuming time of the remaining routes of the candidate routes is determined, which includes:

according to the real-time traffic status information of the local route, the real-time consuming time of passing through the local route is determined; and according to the real-time consuming time of passing through the local route, the real-time remaining consuming time of the candidate routes containing the local routes is updated.

In this embodiment, the MEC server can determine the real-time consuming time of passing through the local route according to the real-time traffic status information of the local route, and then update the real-time remaining consuming time of the candidate routes containing the local routes according to the real-time consuming time of the local route and the estimated passing time of each road section in the global route planning information of each candidate route.

Where, the updated real-time remaining consuming time of the candidate routes is the sum of the real-time consuming time of the local route included in the candidate routes and the estimated passing time of each road section in the remaining route after the local route.

Optionally, the vehicle terminal can also obtain the global route planning information of the candidate routes; and send the global route planning information of the candidate routes to the MEC server. The MEC server receives the global route planning information of the candidate routes sent by the vehicle terminal, and adjusts the recommended order of the candidate routes of the vehicle terminal according to the real-time traffic status information of the local route and the global route planning information of the candidate routes, which can further optimize the recommendation order of the candidate routes.

Optionally, during this navigation process, when the vehicle terminal sends the real-time traffic status information of the local route to the MEC server for the first time, it can send the global route planning information of each candidate route to the MEC server together, and the MEC server receives and stores the global route planning information of each candidate route. In the subsequent process of this navigation, the MEC server can directly use the global route planning information of each candidate route that has been stored. Where, the global route planning information of the candidate routes includes the process characteristics of the planned route, and the time-consuming data characteristics of each candidate route on each section of the road such as the estimated passing time of each road section. The global route planning information may also include other information contained in the original data of the candidate routes, which will not be repeated here in this embodiment.

Optionally, the vehicle terminal can also send the global route planning information of each candidate route to the MEC server together each time it sends the real-time traffic status information of the local route to the MEC server.

Optionally, the MEC server can also be used as the cloud server for the first route planning, at this time, the MEC server can obtain the planned route according to the OD point of this navigation and then store it corresponding to the identification information of the vehicle terminal. In the subsequent navigation process, the MEC server can directly use the stored global route planning information of each candidate route.

In a possible implementation, according to the real-time traffic status information of the local route, the real-time consuming time of passing through the local route is determined includes at least one of the following:

according to the real-time traffic status information of the local route, the real-time consuming time of turning left from the current position to pass through the next intersection is determined; according to the real-time traffic status information of the local route, the real-time consuming time of going straight from the current position to pass through the next intersection is determined; and according to the real-time traffic status information of the local route, the real-time consuming time of turning right from the current position to pass through the next intersection is determined.

In a possible implementation, according to the real-time traffic status information of the local route, the real-time consuming time of passing through the local route is determined includes at least one of the following:

according to the real-time traffic status information of the local route, the real-time consuming time of turning left from the current position to pass through the next intersection and the first road section thereafter is determined; according to the real-time traffic status information of the local route, the real-time consuming time of going straight from the current position to pass through the next intersection and the first road section thereafter is determined; and according to the real-time traffic status information of the local route, the real-time consuming time of turning right from the current position to pass through the next intersection and the first road section thereafter is determined.

Exemplarily, taking the scenario shown in FIG. 4 as an example, an implementation of the real-time remaining consuming time of the candidate routes is determined according to the real-time traffic status information of the local route is exemplarily illustrated. As shown in FIG. 4, during driving process, when the vehicle reaches a position $P$ at time $t_b$, the vehicle terminal enters the communication range of the RSU at the intersection (for example, a circle with a radius r shown in FIG. 4), assuming that the current road section is $l_0$. For the candidate route that needs the next intersection in the route, according to the way of passing through the intersection (including at least one of the following: going straight, turning left and turning right), the candidate routes are divided into: a candidate route $L_s$ going straight at the intersection, a candidate route $L_r$ turning right at the intersection, and the candidate route $L_l$ turning left at the intersection. According to the state of the traffic light $S_1$ at the next intersection in real time, the vehicle terminal obtains the consuming time $t_{cs}$, $t_{cl}$ and $t_{cr}$ of waiting for traffic lights to go straight, turn left, and turn right through the intersection, and the real-time traffic consuming time of the next road section $l_s$, $l_l$ and $l_r$ after going straight, turning left, and turning right through the intersection. The passing time of the intersection is affected by the real-time traffic lights, the passing time of the road section changes due to possible traffic incidents or vehicle accidents on the spot. The RSU feeds back this kind of real-time travel time information to the vehicle terminal, and the vehicle terminal sends both the real-time traffic status information of the local route and the global route planning information of the initial candidate routes to the MEC, requesting the MEC to reorder the candidate routes. The MEC dynamically updates the remaining real-time consuming time of the candidate routes according to the real-time traffic status information of the local route. For the candidate route k at the current time $t_b$, the remaining real-time consuming time of the candidate routes is recalculated as following:

$$\varphi_k^b = \begin{cases} t_{l_0}^b + t_{c_l}^b + h_t(l_l, t_b) + \sum_{l \in L_l, l \neq l_l, l \neq l_0} f_t(l, t_a), & \text{if } l_{next} = l_l \\ t_{l_0}^b + t_{c_s}^b + h_t(l_s, t_b) + \sum_{l \in L_s, l \neq l_s, l \neq l_0} f_t(l, t_a), & \text{if } l_{next} = l_s \\ t_{l_0}^b + t_{c_r}^b + h_t(l_r, t_b) + \sum_{l \in L_r, l \neq l_r, l \neq l_0} f_t(l, t_a), & \text{if } l_{next} = l_r \end{cases}$$

Where, $l_{next}$ represents the next road section after the intersection, $l_s$, $l_l$ and $l_r$ are the next road section after going straight, turning left and turning right through the intersection, $t_{l_0}^b$ is the real-time consuming time from the current position $p$ to the intersection, $t_{c_l}^b$, $t_{c_s}^b$ and $t_{c_r}^b$ are the consuming time waiting for traffic lights to go straight, turn left and turn right through the intersection, $h_t(l, t_b)$ is the real-time consuming time of passing through the road section $l$ at time $t_b$, $h_t(l_l, t_b)$, $h_t(l_s, t_b)$ and $h_t(l_r, t_b)$ are the real-time traffic consuming time of passing through the road section $l_s$, $l_l$ and $l_r$ at time $t_b$, $\sum_{l \in L_l, l \neq l_l, l \neq l_0} f_t(l, t_a)$ represents the time-consuming of passing through other road sections after the local route on the candidate route $L_l$, $\sum_{l \in L_s, l \neq l_s, l \neq l_0} f_t(l, t_a)$ represents the time-consuming of passing through other road sections after the local route on the candidate route $L_s$. $\sum_{l \in L_r, l \neq l_0} f_t(l, t_a)$ represents the time-consuming of passing through other road sections after the local route on the candidate route $L_r$.

In this embodiment, the real-time remaining consuming time of the candidate routes is calculated, in addition to considering the global route planning information of the candidate routes, the real-time road information of the local route will also be integrated, which includes: the actual flow, the intersection and the road environment of the road at the current time, and the consuming time of passing traffic lights controlling different directions of the intersection in real time. Based on the static global route planning information and the dynamic real-time traffic status information of the local route of the candidate routes, the MEC corrects the real-time remaining consuming time of the initial candidate routes and reorders the recommended order of the candidate routes, thereby can guide the user to optimize the navigation route in real time.

Step S205, the server sorts the candidate routes according to the real-time remaining consuming time to obtain the recommended order of the candidate routes.

After obtaining the real-time remaining consuming time of each candidate route, the candidate routes are sorted according to the order from short to long of the real-time remaining consuming time of each candidate route, to obtain the recommended order of the candidate routes.

Where, the shorter the real-time remaining consuming time of the candidate routes is, the higher the recommended order of it is, so that the recommended order of the candidate routes can be dynamically optimized according to the real-time communication state information of the local route.

Step S206, the server sends an adjusted recommended order of the candidate routes to the vehicle terminal.

After sorting the candidate routes and obtaining the recommended order of the candidate routes, the MEC server sends the adjusted recommended order of the candidate routes to the vehicle terminal.

Optionally, the MEC server can send the reordered candidate routes to the vehicle terminal after reordering the candidate routes according to the recommended order; or, the MEC server can directly send the recommended order of each candidate route to the vehicle terminal; or, the MEC server can send the recommended order of each candidate route and the real-time remaining time to the vehicle terminal, which will not be repeated here in this embodiment.

Step S207, the vehicle terminal receives the recommended order of the candidate routes fed back by the server.

Where, the recommended order of the candidate routes is obtained after adjustment according to the real-time traffic status information of the local route.

Step S208, the vehicle terminal determines the optimal navigation route according to the recommended order of the candidate routes.

After obtaining the recommended order of the candidate routes, the vehicle terminal can select the candidate route with the highest recommended order as the optimal navigation route.

Optionally, after determining the optimal navigation route, the vehicle terminal can directly switch the current navigation route to the optimal navigation route.

Optionally, after determining the optimal navigation route, the vehicle terminal can send a first prompt information of switching the optimal navigation to the user, and switch the current navigation route to the optimal navigation route after the user confirms the switch.

Further, the first prompt information of switching the optimal navigation may also include information such as the real-time remaining time of the optimal navigation route and the time that can be shortened by switching the optimal navigation, which is used for the user to refer to and determine whether to switch the navigation route.

Optionally, after obtaining the recommended order of the candidate routes, the vehicle terminal can also determine the top candidate routes in the recommended order, and send a second prompt information to the user. The second prompt information may include the recommended order and the real-time remaining time of the candidate routes with the top recommended order, which is used for the user to refer to whether to switch the current navigation route to one of them, and update the navigation route according to the user's selection result.

In this implementation, only the one process for processing navigation data when arriving at the intersection is taken as an example to illustrate. In the process of vehicle driving from the origin point to a destination point, every time the vehicle reaches the $P$ position of an intersection, that is, enters the communication range of the road side unit in the intersection, the method provided in this embodiment is used to optimize the navigation route once, and the adjusted route is obtained. According to the final determined navigation route, the vehicle drives to the $P'$ position of the next intersection, The method provided in this embodiment is used to optimize the navigation route continually, the adjusted route is obtained, according to the final determined navigation route, the vehicle drives to the $P''$ position of the next intersection, and so on, so as to realize the continuous real-time update of the user's navigation route until reaching the destination point.

In the embodiment of the present application, the traffic lights does not affect the first planned route, but dynamically interferes with the current driving route and adjusts the candidate route solution during the traveling process. When the next intersection is about to arrive, the vehicle terminal can obtain the waiting time and travel time of turning left, going straight and turning right at the intersection in real time, and feed back to the MEC server. According to the real-time consuming time passing through the intersection in different directions controlled by the traffic lights, the MEC server intervenes to reorder the subsequent routes, and sends the reordering results back to the vehicle terminal to realize that the intersection traffic lights affect the user's current route planning in real time.

In addition, the candidate route obtained by first planning when the user is traveling is the best predicted result given at the departure time according to the traffic flow and road condition of the same period in history. During driving, when the real traffic state of the road section changes, road side unit feeds back the real local route travel state change information to the vehicle terminal, and the vehicle terminal sends the local route travel state change to the MEC server. The MEC server, dynamically calculates and adjusts the recommended order of the candidate routes by combing the global route planning information of the original candidate route and the real information of the local route traffic status change, and returns the optimized candidate route to the vehicle terminal to guide the user to obtain real-time better route. It can make the real-time passing time of traffic lights, real-time road condition of the road, a sudden traffic accident, temporary traffic flow control and other factors affecting road traffic in the planned route affect the route planning solution in real time, adjust a users' route in time, and provide users with a real-time and personalized global optimal route combined with their own travel habits data.

In another implementation of this embodiment, when the vehicle is driving on a road section, the vehicle terminal can also receive the real-time traffic status information of the current road section sent by the road side unit on the current road section and send it to the MEC server. If determining that there are abnormal events (such as road control, a traffic accident, etc.) in the current road section according to the real-time traffic status information of the current road section, the MEC server readjusts the recommended order of the candidate routes, and feeds back the reordered candidate routes to the vehicle terminal. The vehicle terminal determines the optimal navigation route according to the reordered candidate routes.

Optionally, the real-time traffic status information of the current road section may also include the estimated travel time of the current road section. Different abnormal events may lead to different times when the road is unable to pass normally, the travel time can be estimated and the candidate routes can be reorder.

Optionally, if it is determined that there an abnormal event in the current road section, the candidate routes can be re-planned to obtain a better navigation route.

According to the embodiment of the present application, in the process of the vehicle driving, whenever entering the communication range of the road side unit in the intersection, the road side unit in the intersection feeds back the real-time traffic status information of the real local route to the vehicle terminal, the vehicle terminal sends the local route traffic status change to the MEC server, the MEC server dynamically calculates and adjusts the recommended order of the candidate routes according to the real-time traffic status information of the local route and the global route planning information of the candidate routes, and returns the optimized candidate route to the vehicle terminal to guide the user to obtain a real-time better route. According to the real-time passing time of traffic lights at the intersection, the real-time traffic flow near the road, road condition, emergencies and other factors that affect road traffic, and the comprehensive sorting of the candidate routes, the recommended order of the candidate routes can be adjusted in time, so as to give the user a real-time and personalized global optimal navigation route.

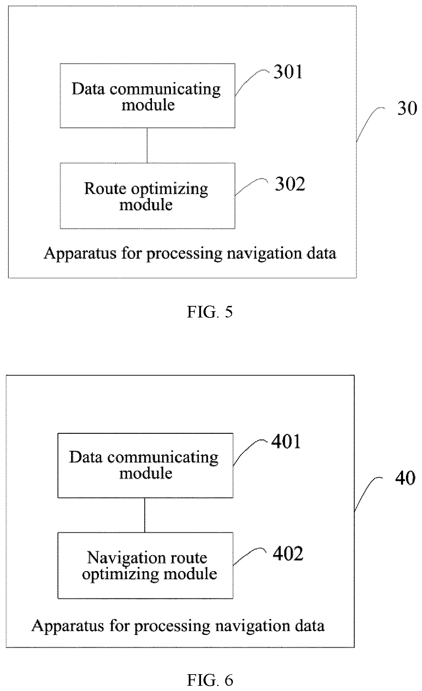

FIG. 5 is a schematic diagram of an apparatus for processing navigation data provided by Embodiment 3t of the present application. The apparatus for processing navigation data provided by the embodiment of the present application can execute the processing flow provided by the method for processing navigation data embodiment, and can be applied to a server, such as the MEC server. As shown in FIG. 5, an apparatus for processing navigation data 30 includes: a data communicating module 301 and a route optimizing module 302.

Specifically, the data communicating module 301 is used to receive the real-time traffic status information of the local route sent by the vehicle terminal.

The route optimizing module 302 is used to adjust the recommended order of the candidate routes of the vehicle terminal according to the real-time traffic status information of the local route.

The data communicating module 301 is also used to send the adjusted recommended order of the candidate routes to the vehicle terminal.

The apparatus provided in the embodiment of the present application can be specifically used to execute the method flow executed by the server in the foregoing Embodiment 1, and the specific functions will not be repeated here.

The embodiment of the present application, which includes by, in the process of the vehicle driving, obtaining the real-time traffic status information of the local route within a distance ahead in real time, sending the real-time communication state information of the local route to the server, and optimizing and adjusting the recommended order of each candidate route by the server according to the real-time traffic status information of the local route, the current optimal navigation route can be determined by the vehicle terminal according to the adjusted recommended order of the candidate routes, thereby can dynamically optimize and adjust a navigation route according to a real-time traffic status of the local route ahead, and provide a better navigation route for a vehicle.

Based on the above Embodiment 3, in Embodiment 4, the route optimizing module is also used to:
determine the real-time remaining consuming time of the candidate routes according to the real-time traffic status information of the local route; sort the candidate routes according to the real-time remaining consuming time to obtain the recommended order of the candidate routes.

In a possible implementation, the route optimizing module is also used to:
determine the real-time consuming time of passing through the local route according to the real-time traffic status information of the local route; and update the real-time remaining consuming time of the candidate routes containing the local routes according to the real-time consuming time of passing through the local route.

In a possible implementation, the route optimizing module is also used to:
determine the real-time consuming time of turning left from the current position to pass through the next intersection according to the real-time traffic status information of the local route; determine the real-time consuming time of going straight from the current position to pass through the next intersection according to the real-time traffic status information of the local route; and determine the real-time consuming time of turning right from the current position to pass through the next intersection according to the real-time traffic status information of the local route.

In a possible implementation, the route optimizing module is also used to:
determine the real-time consuming time of turning left from the current position to pass through the next intersection and the first road section thereafter according to the real-time traffic status information of the local route; determine the real-time consuming time of going straight from the current position to pass through the next intersection and the first road section thereafter according to the to pass through the next intersection and the first road section thereafter according to the real-time traffic status information of the local route; and determine the real-time consuming time of turning right from the current position to pass through the next intersection and the first road section thereafter according to the real-time traffic status information of the local route.

In a possible implementation, the data communicating module is also used to:
receive the global route planning information of the candidate routes sent by the vehicle terminal.

In a possible implementation, the route optimizing module is also used to:
adjust the recommended order of the candidate routes of the vehicle terminal according to the real-time traffic status information of the local route and the global route planning information of the candidate routes.

In a possible implementation, the real-time traffic status information of the local route includes at least one of the following:
the real-time consuming time of arriving at the next intersection from the current position; the time-consuming waiting for traffic lights passing through the intersection; and the real-time traffic consuming time of passing through the first road section after the intersection.

In a possible implementation, the time-consuming waiting for traffic lights passing through the intersection includes at least one of the following:
the real-time consuming time of waiting for traffic lights to turn left through the intersection; the real-time consuming time of waiting for traffic lights to go straight through the intersection; and the real-time consuming time of waiting for traffic lights to turn right through the intersection.

In a possible implementation, the real-time traffic consuming time of passing through the first road section after the intersection includes at least one of the following:
the real-time traffic consuming time of passing through the first road section after turning left through the intersection; the real-time traffic consuming time of passing through the first road section after going straight through the intersection;

and the real-time traffic consuming time of passing through the first road section after turning right through the intersection.

The apparatus provided in the embodiment of the present application can be specifically used to execute the method flow executed by the server in the foregoing Embodiment 2, and the specific functions will not be repeated here.

According to the embodiment of the present application, in the process of the vehicle driving, whenever entering the communication range of the road side unit in the intersection, the road side unit in the intersection feeds back the real-time traffic status information of the real local route to the vehicle terminal, the vehicle terminal sends the local route traffic status change to the MEC server, the MEC server dynamically calculates and adjusts the recommended order of the candidate routes according to the real-time traffic status information of the local route and the global route planning information of the candidate routes, and returns the optimized candidate route to the vehicle terminal to guide the user to obtain a real-time better route. According to the real-time passing time of traffic lights at the intersection, the real-time traffic flow near the road, road condition, emergencies and other factors that affect road traffic, and the comprehensive sorting of the candidate routes, the recommended order of the candidate routes can be adjusted in time, so as to give the user a real-time and personalized global optimal navigation route.

FIG. 6 is a schematic diagram of an apparatus for processing navigation data provided by the Embodiment 5 of the present application. The apparatus for processing navigation data provided by the embodiment of the present application can execute the processing flow provided by the method for processing navigation data embodiment, and can be applied to the vehicle terminal. As shown in FIG. 6, an apparatus for processing navigation data 40 includes: a data communicating module 401 and a navigation route optimizing module 402.

Specifically, the data communicating module 401 is used to send the real-time traffic status information of the local route to the server.

The data communicating module 401 is also used to receive the recommended order of the candidate routes fed back by the server, where the recommended order of the candidate routes is obtained after adjustment according to the real-time traffic status information of the local route.

The navigation route optimizing module 402 is used to determine the current optimal navigation route according to the recommended order of the candidate routes.

The apparatus provided in the embodiment of the present application can be specifically used to execute the method flow executed by the vehicle terminal in the foregoing first embodiment, and the specific functions will not be repeated here.

The embodiment of the present application, which includes by, in the process of the vehicle driving, obtaining the real-time traffic status information of the local route within a distance ahead in real time, sending the real-time communication state information of the local route to the server, and optimizing and adjusting the recommended order of each candidate route by the server according to the real-time traffic status information of the local route, the current optimal navigation route can be determined by the vehicle terminal according to the adjusted recommended order of the candidate routes, thereby can dynamically optimize and adjust a navigation route according to a real-time traffic status of the local route ahead, and provide a better navigation route for a vehicle.

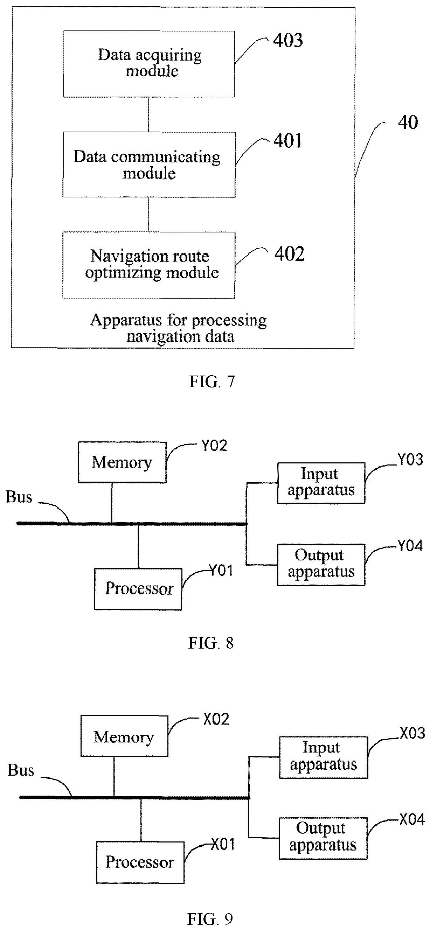

FIG. 7 is a schematic diagram of an apparatus for processing navigation data provided by Embodiment 6 of the present application. Based on the above Embodiment 5, in this embodiment, as shown in FIG. 7, the apparatus for processing navigation data 40 also includes a data acquiring module 403 for obtaining the global route planning information of the candidate routes. The data communicating module is also used to send the global route planning information of the candidate routes to the server.

In a possible implementation, the data communicating module is also used to:
in the process of vehicle driving, whenever entering the communication range of the road side unit in the intersection, receive the real-time traffic status information of the local route sent the road side unit in the intersection.

In a possible implementation, the real-time traffic status information of the local route is determined according to the real-time road condition information of the local route at the current time.

In a possible implementation, the real-time traffic status information of the local route includes at least one of the following:
the real-time consuming time of arriving at the next intersection from the current position; the time-consuming waiting for traffic lights passing through the intersection; and the real-time traffic consuming time of passing through the first road section after the intersection.

In a possible implementation, the time-consuming waiting for traffic lights passing through the intersection includes at least one of the following:
the real-time consuming time of waiting for traffic lights to turn left through the intersection; the real-time consuming time of waiting for traffic lights to go straight through the intersection; and the real-time consuming time of waiting for traffic lights to turn right through the intersection.

In a possible implementation, the real-time traffic consuming time of passing through the first road section after the intersection includes at least one of the following:
the real-time traffic consuming time of passing through the first road section after turning left through the intersection;

the real-time traffic consuming time of passing through the first road section after going straight through the intersection; and the real-time traffic consuming time of passing through the first road section after turning right through the intersection.

In a possible implementation, the navigation route optimizing module is also used to:

switch the current navigation route to the optimal navigation route.

The apparatus provided in the embodiment of the present application can be specifically used to execute the method flow executed by the vehicle terminal in the above Embodiment 2, and the specific functions will not be repeated here.

According to the embodiment of the present application, in the process of the vehicle driving, whenever entering the communication range of the road side unit in the intersection, the road side unit in the intersection feeds back the real-time traffic status information of the real local route to the vehicle terminal, the vehicle terminal sends the local route traffic status change to the MEC server, the MEC server dynamically calculates and adjusts the recommended order of the candidate routes according to the real-time traffic status information of the local route and the global route planning information of the candidate routes, and returns the optimized candidate route to the vehicle terminal to guide the user to obtain a real-time better route. According to the real-time passing time of traffic lights at the intersection, the real-time traffic flow near the road, road condition, emergencies and other factors that affect road traffic, and the comprehensive sorting of the candidate routes, the recommended order of the candidate routes can be adjusted in time, so as to give the user a real-time and personalized global optimal navigation route.

According to the embodiment of the present application, the present application also provides an electronic device and a readable storage medium. As shown in FIG. 8, it is a block diagram of an electronic device according to the method for processing navigation data of the embodiments of the present application. As shown in FIG. 8, the electronic device includes: at least one processor Y01; and a memory Y02 communicating with at least one processor. Where the memory Y02 stores instructions that can be executed by at least one processor Y01, and instructions are executed by at least one processor Y01 to cause the at least one processor Y01 to execute the processing flow executed by the server in any one of the above method embodiments.

Electronic devices are intended to represent various forms of digital computers, such as laptops, desktop computers, workstations, personal digital assistants, servers, blade servers, mainframe computers, and other suitable computers. Electronic devices may also represent various forms of mobile apparatus, such as personal digital processing, cellular phones, smart phones, wearable devices, and other similar computing apparatus. The components shown herein, their connections and relationships, and their functions are merely examples and are not intended to limit the implementation of the present application described and/or required herein.

As shown in FIG. 8, the electronic device includes: one or more processors Y01, memory Y02, and interfaces for connecting various components, which includes a high-speed interface and a low-speed interface. The components are interconnected by different buses and can be installed on a common motherboard or installed in other ways as required. The processor may process instructions executed within the electronic device, which include instructions stored in or on memory to display graphical information of the GUI (Graphical User Interface) on an external input/output apparatus (such as, a display device coupled to the interface). In other implementations, multiple processors and/or multiple buses may be used with a plurality of memories if required. Similarly, multiple electronic devices can be connected, each of which provides some of the necessary operations (for example, as a server array, a set of blade servers, or a multiprocessor system). In FIG. 8, one processor Y01 is taken as an example.

The memory Y02 is a non-transitory computer-readable storage medium provided by the present application. Where the memory stores instructions that can be executed by at least one processor to cause at least one processor to execute the method for processing navigation data provided by the present application. The non-instantaneous computer-readable storage medium of the present application stores computer instructions, and the computer instructions is used to cause the computer to cause the method for processing navigation data provided by the present application.

As a non-transitory computer-readable storage medium, the memory Y02 can be used to store non-transitory software programs, non-transitory computer executable programs and modules, such as program instructions/modules corresponding to the method for processing navigation data in the embodiment of the present application (for example, the data communicating module 301 and the route optimizing module 302 shown in FIG. 5). The processor Y01 executes various functions and data processing of the server by running non-transitory software programs, instructions and modules stored in the memory Y02, that is, to realize the method for processing navigation data executed by the server in the above method embodiment.

The memory Y02 may include a program storage area and a data storage area. Where the program storage area can store the application program required by the operating system and at least one function; and the data storage area can store the data created according to the use of the electronic device for processing navigation data. In addition, the memory Y02 may include a high-speed random access memory, and may also include a non-transitory memory, such as at least one disk storage component, a flash memory component, or other non-instantaneous solid-state memory components. In some embodiments, the memory Y02 may optionally include a memory set remotely relative to the processor Y01, which can be connected to the electronic device for processing navigation data via a network. Examples of the above networks include, but are not limited to, the Internet, intranet, Local Area Network, mobile communication network and their combinations.

The electronic device for the method for processing navigation data may include: an input apparatus Y03 and an output apparatus Y04. The processor Y01, the memory Y02, the input apparatus Y03 and the output apparatus Y04 can be connected through bus or other ways, in FIG. 8, a connection through bus is taken as an example.

The input apparatus Y03 can receive input number or character information, and generate key signal input related to user settings and function control of electronic device for processing navigation data, such as touch screen, keyboard, mouse, track pad, touch pad, indicator bar, one or more mouse buttons, trackball, joystick and other input apparatuses. The output apparatus Y04 may include a display device, an auxiliary lighting apparatus (such as, LED) and a tactile feedback apparatus (such as, a vibration motor), etc. The display device may include, but is not limited to, liquid crystal display (LCD), light emitting diode (LED) display and plasma display. In some implementation, the display device may be a touch screen.

Various implementations of the systems and technologies described here may be implemented in a digital electronic circuit system, an integrated circuit system, a specialized ASIC (Application Specific Integrated Circuit), computer hardware, firmware, software, and/or a combination thereof. These various implementation may include: implemented in one or more computer programs, the one or more computer programs may be executed and/or interpreted on a programmable system including at least one programmable processor, the programmable processor may be a dedicated or general-purpose programmable processor, may receive data and instructions from a storage system, at least one input apparatus and at least one output apparatus, and transmit data and instructions to the storage system, the at least one input apparatus, and the at least one output apparatus.

According to the embodiment of the present application, where the present application also provides a computer program product, the program product includes: a computer program, the computer program is stored in a readable storage medium, at least one processor of the electronic device can read the computer program from a readable storage medium, and at least one processor executes the computer program to make the electronic device execute the solution provided by any one of the foregoing embodiments.

These computer programs (also known as programs, software, software applications, or code) include machine instructions for programmable processors and can be implemented using high-level procedures and/or object-oriented programming languages, and/or assembly/machine languages. As used herein, the terms "machine-readable medium" and "computer-readable medium" refer to any computer program product, device, and/or apparatus (such as, magnetic disk, optical disk, a memory, a programmable logic device (PLD)) used to provide machine instructions and/or data to a programmable processor, which includes a machine-readable medium that receives machine instructions as machine-readable signals. The term "machine-readable signal" refers to any signal used to provide machine instructions and/or data to a programmable processor.

In order to provide interaction with the user, the systems and techniques described here may be implemented on a computer having: a display apparatus for displaying information to the user (such as, CRT (cathode ray tube) or LCD (liquid crystal display) monitor); and a keyboard and a pointing apparatus (such as, a mouse or a trackball) through which the user can provide input to the computer. Other types of apparatus may also be used to provide interaction with the user. For example, the feedback provided to the user may be any form of sensing feedback (such as, visual feedback, auditory feedback, or tactile feedback); and input from the user may be received in any form (including acoustic input, voice input or tactile input).

The systems and techniques described here may be implemented in a computing system including a back-end component (such as, as a data server), or a computing system including a middleware component (such as, an application server), or a computing system including a front-end component (such as, a user computer with a graphical user interface or a web browser through which a user can interact with the implementation of the systems and technologies described here), or a computing system including any combination of such back-end component, middleware component or front-end component. The components of the system may be interconnected by digital data communication in any form or medium (such as, a communication network). Examples of communication networks include local area network (LAN), wide area network (WAN), and the Internet.

The computer system may include a client and a server. The client and the server are generally far away from each other and usually interact through communication networks. A relationship between the client and the server is generated by computer programs running on the corresponding computers and having client-server relationship with each other.

According to the embodiment of the present application, the present application also provides an electronic device and a readable storage medium. As shown in FIG. 9, it is a block diagram of an electronic device for the method for processing navigation data of the embodiments of the present application. As shown in FIG. 9, the electronic device includes: at least one processor X01; and a memory X02 communicated and connected with at least one processor. Where the memory X02 stores instructions that can be executed by at least one processor X01, and the instructions are executed by at least one processor X01 to enable the at least one processor X01 to execute the processing flow executed by the vehicle terminal in any of the above method embodiments. The electronic device for the method for processing navigation data may include: an input apparatus X03 and an output apparatus X04. The processor X01, the memory X02, the input apparatus X03 and the output apparatus X04 can be connected by bus or other means, in FIG. 9, a bus connection is taken as an example.

In this embodiment, the implementation of the electronic device and the readable storage medium is similar to that of the corresponding embodiment in FIG. 8, and this embodiment will not be repeated this time.

It should be understood that the various forms of processes shown above can be used to reorder, add, or delete steps. For example, the steps recorded in the present application can be executed in parallel, in sequence or in different orders, as long as the desired result of the technical solution disclosed in the present application can be achieved, which is not limited herein.

The above specific implementations do not constitute a limitation on the protection scope of the present application. Those skilled in the art should understand that various modifications, combinations, sub-combinations and substitutions can be made according to design requirements and other factors. Any amendments, equivalent substitutions and improvements made within spirit and principles of the present application shall be included in the scope of protection of the present application.

**Claims**

1. A method for processing navigation data, comprising:

   receiving (S102) real-time traffic status information of a local route sent by a vehicle terminal;
   adjusting (S103) a recommended order of candidate routes of the vehicle terminal according to the real-time traffic status information of the local route; and
   sending (S104) adjusted recommended order of the candidate routes to the vehicle terminal.

2. The method according to claim 1, wherein the adjusting (S103) a recommended order of candidate routes of the vehicle terminal according to the real-time traffic status information of the local route comprises:

   determining (S204), according to the real-time traffic status information of the local route, real-time remaining consuming time of the candidate routes; and
   sorting (S205) the candidate routes, according to the real-time remaining consuming time, to obtain a recommended order of the candidate routes; optionally,
   the determining (S204), according to the real-time traffic status information of the local route, real-time remaining consuming time of the candidate routes comprises:

      determining, according to the real-time traffic status information of the local route, real-time consuming time of passing through the local route; and
      updating the real-time remaining consuming time of the candidate routes including the local route, according to the real-time consuming time of passing through the local route.

3. The method according to claim 2, wherein the determining, according to the real-time traffic status information of the local route, real-time consuming time of passing through the local route comprises at least one of the following:

      determining, according to the real-time traffic status information of the local route, real-time consuming time of turning left from a current position to pass through a next intersection;
      determining, according to the real-time traffic status information of the local route, real-time consuming time of going straight from the current position to pass through the next intersection; and
      determining, according to the real-time traffic status information of the local route, real-time consuming time of turning right from the current position to pass through the next intersection; optionally,
      the determining, according to the real-time traffic status information of the local route, real-time consuming time of passing through the local route comprises at least one of the following: determining, according to the real-time traffic status information of the local route, real-time consuming time of turning left from a current position to pass through a next intersection and a first road section thereafter;
      determining, according to the real-time traffic status information of the local route, real-time consuming time of going straight from the current position to pass through the next intersection and the first road section thereafter; and
      determining, according to the real-time traffic status information of the local route, real-time consuming time of turning right from the current position to pass through the next intersection and the first road section thereafter.

4. The method according to claim 1, wherein before the adjusting (S103) a recommended order of candidate routes of the vehicle terminal according to the real-time traffic status information of the local route, the method further comprises:

receiving global route planning information of the candidate routes sent by the vehicle terminal; optionally, the adjusting (S103) a recommended order of candidate routes of the vehicle terminal according to the real-time traffic status information of the local route comprises:
adjusting the recommended order of the candidate routes of the vehicle terminal, according to the real-time traffic status information of the local route and the global route planning information of the candidate routes.

5. The method according to any one of claims 1-4, wherein the real-time traffic status information of the local route comprises at least one of the following:

real-time consuming time of arriving at a next intersection from a current position;
consuming time of waiting for traffic lights when passing through the intersection; and
real-time traffic consuming time of passing through a first road section after the intersection.

6. The method according to claim 5, wherein the consuming time of waiting for traffic lights when passing through the intersection comprises at least one of the following:

real-time consuming time of waiting for traffic lights to turn left through the intersection;
real-time consuming time of waiting for traffic lights to go straight through the intersection; and
real-time consuming time of waiting for traffic lights to turn right through the intersection; optionally,
the real-time traffic consuming time of passing through a first road section after the intersection comprises at least one of the following:

real-time traffic consuming time of passing through the first road section after turning left through the intersection;
real-time traffic consuming time of passing through the first road section after going straight through the intersection; and
real-time traffic consuming time of passing through the first road section after turning right through the intersection.

7. A method for processing navigation data, comprising:

sending (S101) real-time traffic status information of a local route to a server;
receiving (S105) a recommended order of candidate routes fed back by the server, wherein the recommended order of the candidate routes is obtained after adjustment according to the real-time traffic status information of the local route; and
determining (S106) a current optimal navigation route according to the recommended order of the candidate routes.

8. The method according to claim 7, further comprises:

obtaining global route planning information of the candidate routes; and
sending the global route planning information of the candidate routes to the server.

9. The method according to claim 7 or 8, wherein before the sending real-time traffic status information of a local route to a server, the method further comprises:

receiving (S201) the real-time traffic status information of the local route sent by a road side unit in the intersection, whenever entering a communication range of the road side unit in the intersection in the process of vehicle driving; optionally,
the real-time traffic status information of the local route is determined according to the real-time road condition information of the local route at current time.

10. The method according to claim 9, wherein the real-time traffic status information of the local route comprises at least one of the following:

real-time consuming time of arriving at a next intersection from the current position;
consuming time of waiting for traffic lights when passing through the intersection; and
real-time traffic consuming time of a first road section after passing through the intersection.

11. The method according to claim 10, wherein the consuming time of waiting for traffic lights when passing through the intersection comprises at least one of the following:

real-time consuming time of waiting for traffic lights to turn left through the intersection;
real-time consuming time of waiting for traffic lights to go straight through the intersection; and
real-time consuming time of waiting for traffic lights to turn right through the intersection; optionally,
the real-time traffic consuming time of a first road section after passing through the intersection comprises at least one of the following:

real-time traffic consuming time of passing through the first road section after turning left through the intersection;
real-time traffic consuming time of passing through the first road section after going straight through the intersection; and
real-time traffic consuming time of passing through the first road section after turning right through the intersection.

12. An electronic device, comprising:

at least one processor (Y01); and
a memory (Y02) in communication with the at least one processor (Y01); wherein,
the memory (Y02) stores instructions executable by the at least one processor (Y01), and the instructions are executed by the at least one processor (Y01) to enable the at least one processor (Y01) to execute the method according to any one of claims 1-6.

13. An electronic device, comprising:

at least one processor (X01); and
a memory (X02) in communication with the at least one processor (X01); wherein,
the memory (X02) stores instructions executable by the at least one processor (X01), and the instructions are executed by the at least one processor (X01) to enable the at least one processor (X01) to execute the method according to any one of claims 7-11.

14. A non-transitory computer readable storage medium storing computer instructions, wherein the computer instructions are used to cause the computer to execute the method according to any one of claims 1-11.

15. A computer program product, comprising a computer program, when executed by a processor, implements the method according to any one of claims 1-11.

FIG. 1

```
┌─────────────────────┐                      ┌─────────────────────┐
│   Vehicle terminal  │                      │       Server        │
└──────────┬──────────┘                      └──────────┬──────────┘
           ┆                                             ┆
           ┆              ╭─ S101                        ┆            ╭─ S102
┌──────────┴──────────┐                      ┌───────────┴───────────┐
│ A vehicle terminal  │                      │ The server receives   │
│ sends real-time     │  ┄┄┄┄┄┄┄┄┄┄┄▶        │ the real-time traffic │
│ traffic status      │                      │ status information of │
│ information of a    │                      │ the local route       │
│ local route to a    │                      │ sent by the vehicle   │
│ server              │                      │ terminal              │
└──────────┬──────────┘                      └───────────┬───────────┘
           ┆                                              │         ╭─ S103
           ┆                                  ┌───────────▼───────────┐
           ┆                                  │ The server adjusts a  │
           ┆                                  │ recommended order of  │
           ┆                                  │ candidate routes of   │
           ┆                                  │ the vehicle terminal  │
           ┆                                  │ according to the      │
           ┆                                  │ real-time traffic     │
           ┆                                  │ status information of  │
           ┆                                  │ the local route       │
           ┆                                  └───────────┬───────────┘
           ┆             ╭─ S105                           │         ╭─ S104
┌──────────┴──────────┐                      ┌───────────▼───────────┐
│ The vehicle terminal│                      │ The server sends      │
│ receives the        │  ◀┄┄┄┄┄┄┄┄┄          │ adjusted recommended  │
│ recommended order   │                      │ order of the candidate│
│ of the candidate    │                      │ routes to the vehicle │
│ routes fed back by  │                      │ terminal              │
│ the server          │                      └───────────────────────┘
└──────────┬──────────┘
           │             ╭─ S106
┌──────────▼──────────┐
│ The vehicle terminal│
│ determines an       │
│ optimal navigation  │
│ route according to  │
│ the recommended     │
│ order of the        │
│ candidate routes    │
└─────────────────────┘
```

FIG. 2

| Vehicle terminal | | Server |
|---|---|---|

S200

The vehicle terminal obtains initial candidate routes and a navigation route, and performs vehicle navigation according to the navigation route

S201

In a process of vehicle driving, whenever entering a communication range of the road side unit in the intersection, the vehicle terminal receives the real-time traffic status information of the local route sent by a road side unit in the intersection

S202

The vehicle terminal sends the real-time traffic status information of the local route to the server

S203

The server receives the real-time traffic status information of the local route sent by the vehicle terminal

S204

The server determines the real-time remaining consuming time of the candidate routes according to the real-time traffic status information of the local route

S205

The server sorts the candidate routes according to the real-time remaining consuming time to obtain the recommended order of the candidate routes

S207

The vehicle terminal receives the recommended order of the candidate routes fed back by the server

S206

The server sends an adjusted recommended order of the candidate routes to the vehicle terminal

S208

The vehicle terminal determines the optimal navigation route according to the recommended order of the candidate routes

FIG. 3

FIG. 4

301

Data communicating
module

302

Route optimizing
module

30

Apparatus for processing navigation data

FIG. 5

401

Data communicating
module

402

Navigation route
optimizing module

40

Apparatus for processing navigation data

FIG. 6

Data acquiring module ⌐ 403

Data communicating module ⌐ 401

40

Navigation route optimizing module ⌐ 402

Apparatus for processing navigation data

FIG. 7

Memory ⌐ Y02

Input apparatus ⌐ Y03

Bus

Output apparatus ⌐ Y04

Processor ⌐ Y01

FIG. 8

Memory ⌐ X02

Input apparatus ⌐ X03

Bus

Output apparatus ⌐ X04

Processor ⌐ X01

FIG. 9